# EUROPEAN PATENT SPECIFICATION

(11) **EP 4 212 717 B1**
(45) Date of publication and mention of the grant of the patent: **23.07.2025**
(21) Application number: 22151453.2
(22) Date of filing: 13.01.2022
(51) Int. Cl.: F03D 1/06, F03D 13/40, F03D 80/00

(54) **A TRAILING EDGE PROTECTOR FOR A WIND TURBINE ROTOR BLADE**
HINTERKANTENSCHUTZ FÜR EINE WINDTURBINENROTORSCHAUFEL
PROTECTEUR DE BORD DE FUITE D'UNE PALE DE ROTOR DE TURBINE ÉOLIENNE

(43) Date of publication of application: 19.07.2023
(73) Proprietor: Nordex Energy SE & Co. KG, 22419 Hamburg (DE)
(72) Inventor: Lipka, Thomas, 18055 Rostock (DE); Tesching, Tobias, 18211 Ostseebad Nienhagen (DE); Zarochentsev, Alexander, 21465 Reinbek (DE)
(74) Representative: Hauck Patent- und Rechtsanwälte PartmbB

(56) References cited:
- EP-B1- 2 424 811
- CN-A- 106 239 597
- CN-U- 210 029 725
- CN-U- 213 738 219
- DE-B3- 102007 035 929
- US-B2- 9 016 989

## Description

The invention relates to a trailing edge protector for a wind turbine rotor blade.

Wind turbine rotor blades are large, heavy and fragile parts. Handling wind turbine rotor blades at the manufacturing site, during transportation or at an erection site therefore is difficult and requires specific tools and expertise. A particularly fragile portion of a wind turbine rotor blade is the trailing edge, which is often very thin for aerodynamic reasons. When moving a wind turbine rotor blade from one place to another, it needs to be supported at at least two different positions, namely at the blade root, which is typically circular and has a large wall thickness providing a high strength, and at a midsection where the wind turbine rotor blade typically has an aerodynamic profile and a relatively thin trailing edge. When supporting the midsection with a belt, for example, it is almost impossible not to damage the trailing edge. This is true in particular when the wind turbine rotor blade during the handling process at the rotor blade manufacturing site needs to be rotated about its longitudinal axis, for example from a first position where the profile chord is arranged horizontally into a second position, where the profile chord is arranged vertically with a trailing edge pointing upwardly. Such a rotation of the wind turbine rotor blade about its longitudinal axis is required for example when the wind turbine rotor blade has to be equipped with an anti-icing system at the leading edge. Then horizontally transported rotor blade has to be positioned with the trailing edge pointing downwards and the leading edge pointing upwards. In this turning position a force resulting from the weight of the rotor blade pushes the trailing edge into the protector.

It is known to place a trailing edge protector at the wind turbine rotor blade's trailing edge during the installation of the rotor blade to a rotor hub, so that the fragile trailing edge will not be damaged when handling the wind turbine rotor blade.

The document CN 106 239 597 A discloses an edge cutting tool for a trailing edge of a wind turbine blade. The tool includes two plates which are arranged on the pressure and suction sides of the wind turbine rotor blade and held in place by holders 3. Once the plates 2 are fixed to the rotor blade, the trailing edge is cut along the rear ends of the plates 2.

The document DE 10 2007 035 929 B3 discloses a trailing edge protector for a wind turbine rotor blade. The protector includes two legs for contacting outer surfaces of the wind turbine rotor blade. The legs are connected to each other by a flexural element. The protector is fastened to the rotor blade by means of a belt guided around the flexural element, so that under tension, the belt presses both legs towards each other and against the outer surfaces of the wind turbine rotor blade.

The document US 9,016,989 B2 discloses a trailing edge protector for a wind turbine rotor blade. The protector includes a first leg with a cushion pad and a second leg with a cushion pad, the legs engaging a pressure side and a suction side of the rotor blade. The protector acts like a spring and effectively holds itself on the rotor blade when installed.

The disclosed trailing edge protectors are used for the protection of the trailing edge during the transportation and/or lifting of a rotor blade having a position with an upwardly pointing trailing edge.

It is an object of the invention to provide a trailing edge protector for a wind turbine rotor blade that provides optimal protection and is easy to use.

This object is solved by the trailing edge protector for a wind turbine rotor blade with the features of claim 1. Aspects of the invention are given in the dependent claims.

The trailing edge protector for a wind turbine rotor blade has the following features:
- a body having central portion, a first leg with a first contact surface and a second leg with a second contact surface, wherein the first leg and the second leg extend from the central portion at a fixed angle and the first contact surface is facing the second contact surface,
- an inlay having a first inlay section and a second inlay section,
- wherein the trailing edge protector is designed to be placed at a trailing edge of a wind turbine rotor blade such that the central portion is arranged near the trailing edge, the first inlay section is arranged between the first contact surface and a suction side surface of the wind turbine rotor blade and the second inlay section is arranged between the second contact surface and a pressure side surface of the wind turbine rotor blade, wherein
- the body is a metal assembly comprising at least one stiffening rib arranged at the central portion and mounted to both legs, and
- at least one leg comprises a release means adapted to exert a force moving the body in a direction away from the wind turbine rotor blade.

In use, the trailing edge protector is placed at the trailing edge of the wind turbine rotor blade and may be held in this position for example by a belt of a hoisting means used for moving the wind turbine rotor blade. If desired, the trailing edge protector may be fastened to the wind turbine rotor blade by any other suitable means.

The invention is based on the insight that conventional trailing edge protectors, which are used e.g. for transporting or lifting a rotor blade, due to their inherent deformability on the one hand do not provide optimal protection. They may apply concentrated loads on the wind turbine rotor blade surface when being deformed, which has been observed in particular after extended use and large number of load cycles. On the other hand, it was found that under load, the trailing edge protectors can be pressed onto the trailing edge in a manner that makes it difficult or even impossible to remove them from the rotor blade without damaging of the trailing edge.

The inventors realized that these difficulties can be overcome by forming the trailing edge protector body as a stiff metal assembly. In particular, the at least one stiffening rib mounted to both legs imparts sufficient stiffness to the protector body such that both legs will always remain essentially at the desired relative angle, even when under load. This helps to avoid damaging of a trailing edge as long as the trailing edge protector is in place, and also avoids that, once the load is released, excessive clamping forces will be exerted by the legs' contact surfaces on the wind turbine rotor blade.

In addition, at least one leg is equipped with a release means adapted to exert a force moving the body in a direction away from the rotor blade. Preferred each leg is equipped with a release means. As these forces can be applied to each leg, it can be avoided that the trailing edge protector and the wind turbine rotor blade become wedged together when removing the trailing edge protector. This makes removing the trailing edge protector easy and safe.

In an aspect, the first leg comprises a first metal plate having an inner side forming the first contact surface and an outer side, and the second leg comprises a second metal plate having an inner side forming the second contact surface and an outer side, wherein the at least one stiffening rib is mounted to the outer side of the first metal plate and to the outer side of the second metal plate. The first metal plate may be shaped to complement the suction side surface of the rotor blade, and/or the second metal plate may be shaped to complement the pressure side surface of the rotor blade. It was found that forming the legs and in particular the contact surfaces of the legs from metal plates provides stiff contact surfaces with excellent long-term stability. Manufacturing of these contact surfaces is particularly easy, because an appropriate shape corresponding to the outer surfaces of the wind turbine rotor blade can be obtained by bending the metal plates in one direction only. The desired bends of the metal plates can be maintained by means of the at least one stiffening rib mounted e.g. directly to the outer sides of the metal plates. Preferably, the mounting can be exercised by welding, so that a stable structure is obtained.

In an aspect, the metal assembly comprises a metal tube arranged at the central portion and having a longitudinal slit with a first longitudinal edge mounted to the first leg and a second longitudinal edge mounted to the second leg. The metal tube may have an inner diameter for example in the range of 5 cm to 20 cm. The longitudinal slit may have a width in the range of for example 2 cm to 10 cm. The metal tube provides a protected free inner space for receiving the trailing edge of the wind turbine rotor blade.

In an aspect, the stiffening rib extends from the central portion along each of the legs for at least 50% of the total length of the respective leg. The stiffening rib may also extend along each of the legs for at least 75% of the total length or even over the entire length or almost the entire length of the respective leg. In this manner, the stiffening rib provides sufficient stability to the legs up to a position close to their free ends.

In an aspect, the stiffening rib at the central portion has a height of at least 10% of the total length of one of the legs, wherein the height is measured in a plane perpendicular to a trailing edge of a wind turbine rotor blade at which the trailing edge protector is placed. This ensures the stiffening rib has a sufficient static height providing a high level of stiffness to the legs. The mentioned rib height may be present at the central portion and optionally also at those portions of the stiffening rib mounted to the legs.

In an aspect, the body comprises two stiffening ribs arranged in a lateral distance from each other. Of course, the body may comprise any number of stiffening ribs, for example 1, 2, 3, 4 or more. Two stiffening ribs in a lateral distance sufficient to receive a belt of a hoisting means in between is particularly advantageous, because then these ribs secure the belt against slipping off from the body.

In an aspect, each of the release means comprises a solid metal block mounted to an outer side of the respective leg. This design of the release means allows to apply the force directly onto the solid metal block, for example with a hammer. When both legs are equipped with such solid metal blocks, the protector can be removed from the wind turbine rotor blade carefully with successive hammer strokes on both metal blocks. If only one solid metal block is mounted to each leg, it is preferably arranged at a central portion of the leg with reference to the longitudinal direction of the body, corresponding to the trailing edge direction. It is also possible to provide each leg with two or more solid metal blocks, for example in a lateral distance, and/or close to the lateral edges of the legs. Then, the hammer strokes can be applied even more carefully at selected sides.

In an aspect, the inlay is separate from the body and each of the inlay sections comprises a mechanical stop, wherein each of the release means is adapted to exert a force on one of the mechanical stops. This means the stiff body can be removed from the trailing edge basically by pushing away the body from the inlay. Applying forces on the rotor blade itself, for example for holding the rotor blade in position when pulling the trailing edge protector away from the rotor blade, is not necessary. Moreover, a relative motion of the inlay with reference to the rotor blade is not required when moving the body away from the rotor blade.

In an aspect, the contact surfaces of the legs and outer surfaces of the inlay sections abutting these contact surfaces when the trailing edge protector is placed at a trailing edge exhibit a low friction coefficient. To this end, the contact surfaces and/or the outer surfaces of the inlays may be smooth and even, coated with a low friction material and/or provided with a lubricating film. No matter how the low friction coefficient is obtained, it is desired to make this friction coefficient lower than a friction coefficient between the wind turbine rotor blades' outer surface and the inlay sections, so that when applying a force onto the body, the body will move relative to the inlay, not the inlay relative to the wind turbine rotor blade. This is helpful in particular when applying an external force to the body. In combination with a release means exerting a force on the inlay (for example on one of the mentioned mechanical stops thereof), the low friction coefficient helps to remove the body from the inlay with lower forces.

In an aspect, the inlay sections are formed by a flexible plate made of fibre reinforced polymer. Both inlay sections may be formed by the same flexible plate which is folded to form both sections, or by two or more separate flexible plates. Using a flexible plate made of fibre-reinforced polymer ensures sufficient stability of the inlay, so that the inlay can be used many times, while at the same time provides a material contacting the wind turbine rotor blade compatible with the rotor blade structure, so that the inlay sections will not damage the wind turbine rotor blade surfaces.

In an aspect, the mechanical stops are each formed by a metal profile having a flat fastening section embedded in the fibre-reinforced polymer of the respective flexible plate. This ensures a durable connection between the highly loaded mechanical stops and the inlay sections.

In an aspect, the inlay sections are formed by sandwich plates having metal top layers and an elastic core. The elastic core may be formed of an elastomeric material, for example. The metal top layers may be formed by an aluminium or steel sheet each, for example. The sandwich plate has a strong and durable surface while it is elastically deformable to some extent in a thickness direction of the plate, making it possible to accept tolerances between the wind turbine rotor blades' outer surfaces and the contact surfaces of the body.

In an aspect, the release means comprises a threaded bolt adapted to be screwed against one of the mechanical stops embedded in the flexible plate. In particular, the threaded bolt may be received in a threaded hole formed at the respective leg and/or at the at least one stiffening rib. A longitudinal axis of the threaded bolt may be arranged perpendicular to the wind turbine rotor blades' trailing edge and approximately parallel to the contact surface of the respective leg, so that when screwing the threaded bolt against the mechanical stop, a force in the desired direction for moving the body away from the inlay is obtained.

In an aspect, the release means comprises a hand-lever. The hand-lever may be arranged at the respective leg in a pivotable manner, for example on a pin welded to the leg. By turning the hand-lever, strong forces can easily be applied.

In an aspect, the hand-lever comprises a radial cam. The radial cam may have a helical shape, so that an effective diameter of the cam increases when the hand-lever is rotated. In this manner, very strong forces can be applied.

In the following, the invention is explained in greater detail based on embodiments shown in drawings. The figures show:
- Fig. 1: a wind turbine rotor blade supported by two belts,
- Fig. 2: a trailing edge protector in an exploded, perspective view,
- Fig. 3: the trailing edge protector of Fig. 2 in a perspective view,
- Fig. 4: a trailing edge protector with solid metal blocks in three different views,
- Fig. 5: another trailing edge protector with threaded bolts in three different views,
- Fig. 6: still another trailing edge protector with a hand-lever in three different views, and
- Fig. 7: an inlay section shown in cross-section.

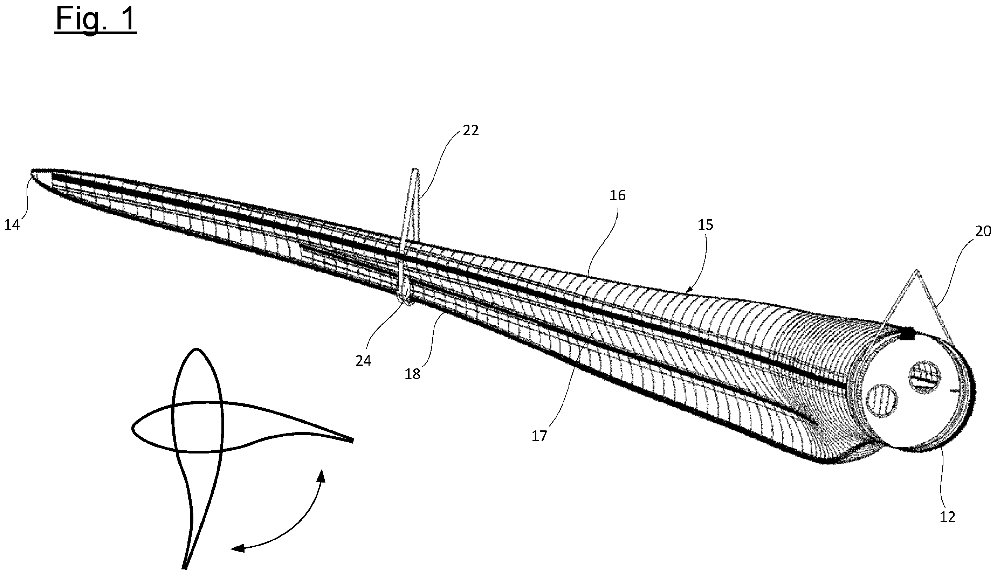

The wind turbine rotor blade 10 shown in Fig. 1 has a blade root 12, a blade tip 14, a leading edge 16, a trailing edge 18, a suction side surface 15 and a pressure side surface 17. In the position shown in Figure 1 the trailing edge 18 is pointing downwards.

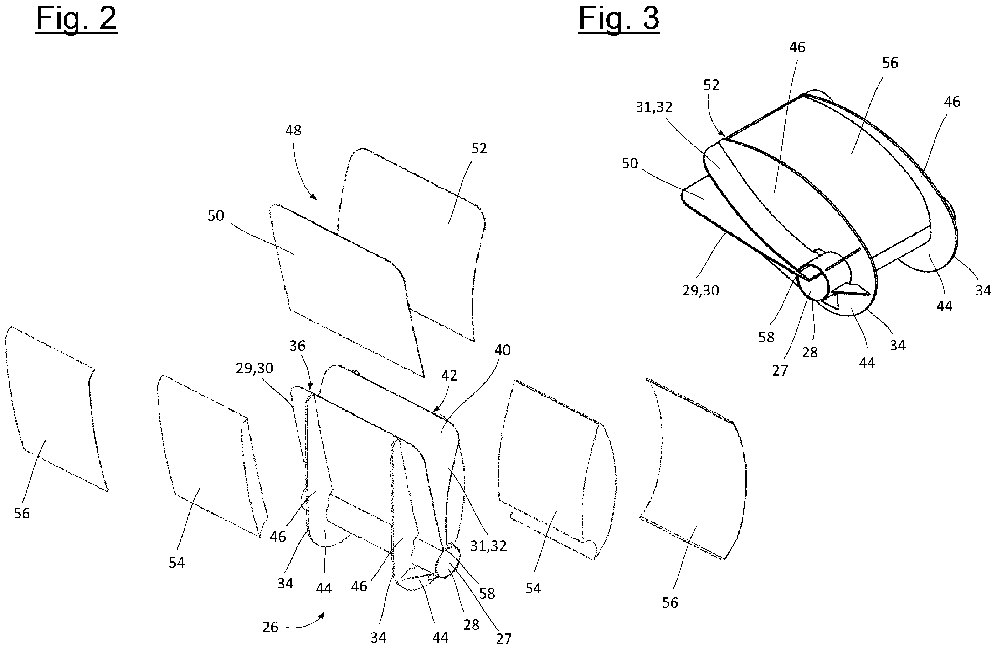

The blade root 12 is circular and has a large wall section, so that a first belt 20 supporting the blade root 12 can be wound about the blade root 12 without running a risk to cause any damages to the blade root 12. To further support the turbine rotor blade 10 in a midsection, a second belt 22 is guided around the wind turbine rotor blade's profile. A trailing edge protector 24 is placed at the trailing edge 18, between the turbine rotor blade 10 and the second belt 22. The trailing edge protector 24 is shown in greater detail in Figs. 2 and 3.

The exploded view of Fig. 2 shows the trailing edge protector 24 having a body 26 which is a welded metal assembly a metal tube 28, a first metal plate 30, a second metal plate 32 and two stiffening ribs 34 arranged in a lateral distance from each other for receiving the second belt 22 in between. The first metal plate 30 has an inner side forming a first contact surface 36 and an outer side 38. The second metal plate 32 has an inner side forming a contact surface 40 and an outer side 42. Both stiffening ribs 34 are welded to the outer side 38 of the first metal plate 30 as well as to the outer side 42 of the second metal plate 32.

The stiffening ribs 34 are formed from a thick metal sheet cut into a pincer-like shape, with two arms 46 extending along the outer sides 38, 42 of the metal plates and a central section 44 running around the metal tube 28. At least at the central section 44, the stiffening ribs 34 have a height of at least 10% of a length of their arms 46 of the metal plates 30, 32, and of about the same size as the diameter of the metal tube 28.

The trailing edge protector 24 further comprises an inlay 48 having a first inlay section 50 and the second inlay section 52.

The first metal plate 30 forms a first leg 29, the second metal plate 32 forms a second leg 31 of the body 26. A central portion 27 of the body is formed by the metal tube 28 and by the central sections 44 of the stiffening ribs 34.

The trailing edge protector 24 of Fig. 2 further includes two thickening elements, each comprising a core 54 and a cover 56, to be placed between the stiffening ribs 34 in order to provide a smooth, rounded outer surface for the belt 22.

Figure 3 shows the trailing edge protector 24 of Fig. 2 in another perspective view with the inlay 48 placed at the respective metal plates 30, 32, so that when the trailing edge protector 24 is placed at the trailing edge 18 of a wind turbine rotor blade 10 as shown in Fig. 1, the first inlay section 50 is arranged between the contact surface 36 and the suction side surface 15 of the wind turbine rotor blade 10, and the second inlay section 52 is placed between the contact surface 40 of the second metal plate 32 and the pressure side surface 17 of the wind turbine rotor blade 10. The figure also shows that the tube 28 has a longitudinal slit 58 with a first longitudinal edge to which the first metal plate 30 is welded, and with a second longitudinal edge to which the second metal plate 32 is welded. The inlay sections 50, 52 cover the contact surfaces 36, 40 of the metal plates 30, 32 in their entirety and further extend into the longitudinal slit 58.

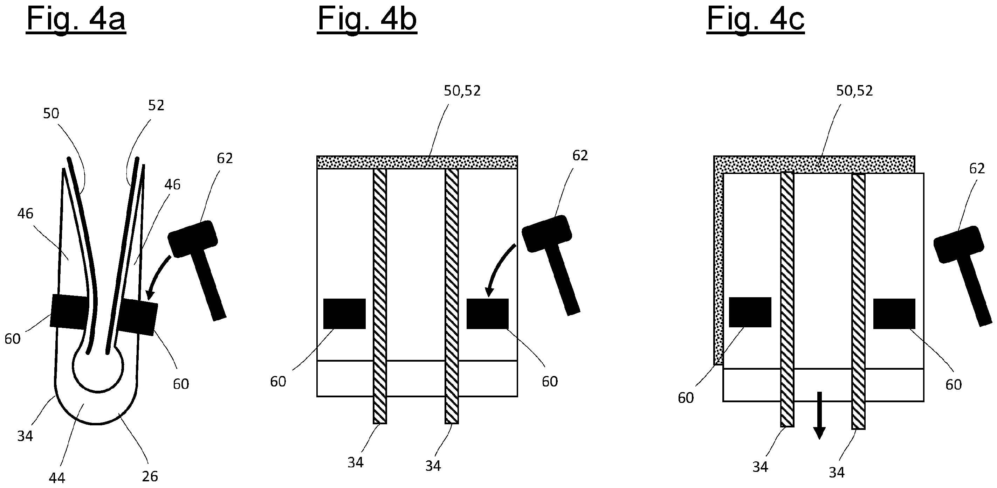

Figures 4a-c show a trailing edge protector 24 similar to the one shown in Figs. 1, 2 and 3 with a release means including four solid metal blocks 60. Two of the solid metal blocks 60 are welded to the outer surface 38 of the first metal plate 30 and two of these solid metal blocks 60 are welded to the outer surface 42 of the second metal plate 32. Each of the Fig. 4a-c illustrates how a force can be applied to one of the metal blocks 60 by means of a hammer 62. In the Fig. 4a and 4b, the body 26 and the inlay 48 with inlay sections 50, 52 are in the relative position in which they are when the trailing edge protector 26 is placed at a trailing edge 18 of a wind turbine rotor blade 10. In Fig. 4c the body 26 forced by the hammer strokes moves away from the inlay 48 and thus from the wind turbine rotor blade 10.

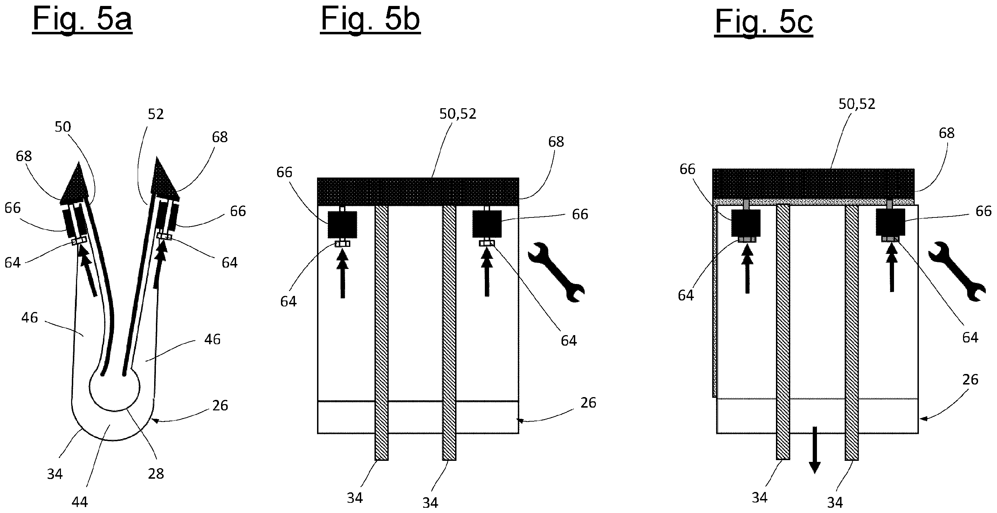

Figures 5a-c show three views of another trailing edge protector 24 similar to the one shown in Figs. 1 to 3 but with another release means comprising four threaded bolts 64 guided in metal blocks 66 each including a threaded bolt and welded to the outer sides 38, 42 of the metal plates 30, 32. The arrows illustrate the direction of a force exerted by the threaded bolts 64 when these are screwed into the threaded holes of the metal blocks 66. To accept these forces, each of the inlay sections 50, 52 is provided with a mechanical stop 68 positioned close to a free end of the respective leg of the body 26. The threaded bolts 64 can be screwed against these mechanical stops 68, thereby forcing the body 26 away from the respective inlay sections 50, 52, as illustrated in Fig. 5c.

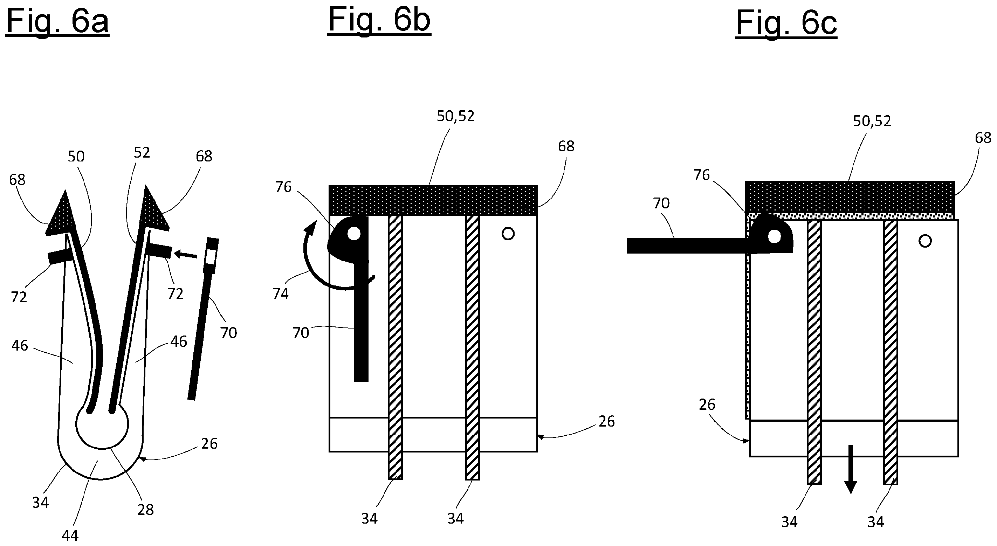

Figures 6a-c show still another release means on a trailing edge protector 24, otherwise being similar to the trailing edge protector 24 shown in Figs. 1 to 3. This release means includes a hand lever 70 guided on a metal pin 72 welded to one of the outer surfaces 38, 42 of the respective metal plate 30, 32. The hand lever 70 can be pivoted about the pin 72 as illustrated by the arrow 74 in Fig. 6b. The hand lever 70 has a radial cam 76 with a surface contour arranged in a helical manner with reference to the pivoting axis defined by the pin 72. When turning the hand lever 70 as illustrated by the arrow 74, the radial cam 76 will exert a force onto the mechanical stop 68 of the respective inlay section 50, 52. The effect is shown to the right, the body 26 is forced away from the respective inlay section 50, 52.

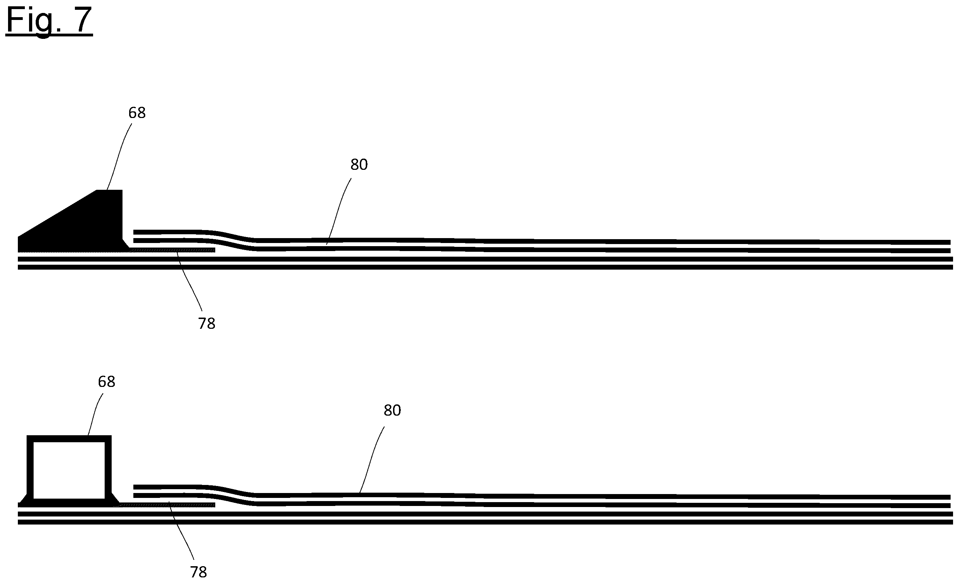

Figure 7 shows two examples for an inlay section that can be used for example as first inlay section 50 and/or second inlay section 52 in the embodiments of Figs. 5 and 6. The mechanical stop 68 is formed by a metal profile with a triangular cross section or a rectangular cross section and a flat fastening section 78. The inlay section is formed by a flexible plate 80 made of several layers of fibre reinforced polymer. The fastening section 78 is embedded in the fibre-reinforced polymer.

### List of reference numerals:

- 10: wind turbine rotor blade
- 12: blade root
- 14: blade tip
- 15: suction side surface
- 16: leading edge
- 17: pressure side surface
- 18: trailing edge
- 20: first belt
- 22: second belt
- 24: trailing edge protector
- 26: body
- 27: central portion
- 28: metal tube
- 29: first leg
- 30: first metal plate
- 31: second leg
- 32: second metal plate
- 34: stiffening rib
- 36: first contact surface
- 38: outer side
- 40: second contact surface
- 42: outer side
- 44: central section
- 46: arm
- 48: inlay
- 50: first inlay section
- 52: second inlay section
- 54: core
- 56: cover
- 58: longitudinal slit
- 60: solid metal block
- 62: hammer
- 64: threaded bolt
- 66: metal block
- 68: mechanical stop
- 70: hand lever
- 72: metal pin
- 74: arrow
- 76: radial cam
- 78: fastening section
- 80: flexible plate

## Claims

1. A trailing edge protector (24) for a wind turbine rotor blade (10), the trailing edge protector (24) comprising:
• a body (26) having a central portion (27), a first leg (29) with a first contact surface (36) and a second leg (31) with a second contact surface (40), wherein the first leg (29) and the second leg (31) extend from the central portion (27) at a fixed angle and the first contact surface (36) is facing the second contact surface (40),
• an inlay (48) having a first inlay section (50) and a second inlay section (52),
• wherein the trailing edge protector (24) is designed to be placed at a trailing edge (18) of a wind turbine rotor blade (10) such that the central portion (27) is arranged near the trailing edge (18), the first inlay section (50) is arranged between the first contact surface (36) and a suction side surface (15) of the wind turbine rotor blade (10) and the second inlay section (52) is arranged between the second contact surface (40) and a pressure side surface (17) of the wind turbine rotor blade (10), **characterised in that**
• the body (26) is a metal assembly comprising at least one stiffening rib (34) arranged at the central portion (27) and mounted to both legs (29, 31), and further **in that**
• at least one leg comprises a release means adapted to exert a force moving the body (26) in a direction away from the wind turbine rotor blade (10).

2. The trailing edge protector (24) of claim 1, **characterised in that** the first leg (29) comprises a first metal plate (30) having an inner side forming the first contact surface (36) and an outer side (38), and the second leg (31) comprises a second metal plate (32) having an inner side forming the second contact surface (40) and an outer side (42), wherein the at least one stiffening rib (34) is mounted to the outer side (38) of the first metal plate (30) and to the outer side (42) of the second metal plate (32).

3. The trailing edge protector (24) of claim 1 or 2, **characterised in that** the metal assembly comprises a metal tube (28) arranged at the central portion (27) and having a longitudinal slit (58) with a first longitudinal edge mounted to the first leg (29) and a second longitudinal edge mounted to the second leg (31).

4. The trailing edge protector (24) of any of the claims 1 to 3, **characterised in that** the stiffening rib (34) extends from the central portion (27) along each of the legs (29, 31) for at least 50% of a total length of the respective leg (29, 31).

5. The trailing edge protector (24) of any of the claims 1 to 4, **characterised in that** the stiffening rib (34) at the central portion (27) has a height of at least 10% of a total length of one of the legs (29, 31), wherein the height is measured in a plane perpendicular to a trailing edge (18) of a wind turbine rotor blade (10) at which the trailing edge protector (24) is placed.

6. The trailing edge protector (24) of any of the claims 1 to 5, **characterised in that** the body (26) comprises two stiffening ribs (34) arranged in a lateral distance from each other.

7. The trailing edge protector (24) of any of the claims 1 to 6, **characterised in that** each of the release means comprises a solid metal block (60) mounted to an outer side (38, 42) of the respective leg (29, 31).

8. The trailing edge protector (24) of any of the claims 1 to 6, **characterised in that** the inlay (48) is separate from the body (26) and each of the inlay sections (50, 52) comprises a mechanical stop (68), wherein each of the release means is adapted to exert a force on one of the mechanical stops (68).

9. The trailing edge protector (24) of any of the claims 1 to 8, **characterised in that** the contact surfaces (36, 40) of the legs (29, 31) and outer surfaces of the inlay sections (50, 52) abutting the contact surfaces (36, 40) when the trailing edge protector (24) is placed at a trailing edge (18) exhibit a low friction coefficient.

10. The trailing edge protector (24) of any of the claims 1 to 9, **characterised in that** the inlay sections (50, 52) are formed by a flexible plate (80) made of fibre reinforced polymer.

11. The trailing edge protector (24) of claim 10, **characterised in that** the mechanical stops (68) are each formed by a metal profile having a flat fastening section (78) embedded in the fibre reinforced polymer of the respective flexible plate (80).

12. The trailing edge protector (24) of any of the claims 1 to 9, **characterised in that** the inlay sections (50, 52) are formed by sandwich plates having metal top layers and an elastic core.

13. The trailing edge protector (24) of any of the claims 8 to 12, **characterised in that** the release means comprises a threaded bolt (64) adapted to be screwed against one of the mechanical stops (68).

14. The trailing edge protector (24) of any of the claims 8 to 12, **characterised in that** the release means comprises a hand lever (70).

15. The trailing edge protector (24) of claim 14, **characterised in that** the hand lever (70) comprises a radial cam (76).

## Patentansprüche

1. Endkantenschoner (24) für ein Windenergieanlagenrotorblatt (10), wobei der Endkantenschoner (24) folgendes umfasst:
• einen Körper (26) aufweisend einen Mittelteil (27), einen ersten Schenkel (29) mit einer ersten Kontaktfläche (36) und einen zweiten Schenkel (31) mit einer zweiten Kontaktfläche (40), wobei der erste Schenkel (29) und der zweite Schenkel (31) sich vom Mittelteil (27) in einem festen Winkel weg erstrecken und die erste Kontaktfläche (36) der zweiten Kontaktfläche (40) zugewandt ist,
• eine Einlage (48), die einen ersten Einlageabschnitt (50) und einen zweiten Einlageabschnitt (52) hat,
• wobei der Endkantenschoner (24) dazu ausgebildet ist, an einer Endkante (18) eines Windenergieanlagenrotorblattes (10) derart angeordnet zu sein, dass der Mittelteil (27) in der Nähe der Endkante (18) angeordnet ist, der erste Einlageabschnitt (50) zwischen der ersten Kontaktfläche (36) und einer Saugseite (15) des Windenergieanlagenrotorblatts (10) angeordnet ist und der zweite Einlageabschnitt (52) zwischen der zweiten Kontaktfläche (40) und einer Druckseite (17) des Windenergieanlagenrotorblatts (10) angeordnet ist, **dadurch gekennzeichnet, dass**
• der Körper (26) eine Metallbaugruppe ist, die mindestens eine am Mittelteil (27) angeordnete und an beiden Schenkeln (29, 31) befestigte Versteifungsrippe (34) umfasst, und ferner dadurch, dass
• mindestens ein Schenkel ein Ablösemittel umfasst, das dazu ausgebildet ist, eine Kraft auszuüben, die den Körper (26) in einer Richtung weg von dem Windenergieanlagenrotorblatt (10) bewegt.

2. Endkantenschoner (24) nach Anspruch 1, **dadurch gekennzeichnet, dass** der erste Schenkel (29) eine erste Metallplatte (30) aufweist, die eine die erste Kontaktfläche (36) bildende Innenseite und eine Außenseite (38) hat, und der zweite Schenkel (31) eine zweite Metallplatte (32) aufweist, die eine die zweite Kontaktfläche (40) bildende Innenseite und eine Außenseite (42) hat, wobei die mindestens eine Versteifungsrippe (34) an der Außenseite (38) der ersten Metallplatte (30) und an der Außenseite (42) der zweiten Metallplatte (32) befestigt ist.

3. Endkantenschoner (24) nach Anspruch 1 oder 2, **dadurch gekennzeichnet, dass** die Metallbaugruppe ein am Mittelteil (27) angeordnetes Metallrohr (28), das einen Längsschlitz (58) mit einer ersten Längskante, die am ersten Schenkel (29) befestigt ist, und einer zweiten Längskante, die am zweiten Schenkel (31) befestigt ist, aufweist.

4. Endkantenschoner (24) nach einem der Ansprüche 1 bis 3, **dadurch gekennzeichnet, dass** die Versteifungsrippe (34) sich vom Mittelteil (27) ausgehend entlang jedem der Schenkel (29, 31) über mindestens 50 % einer Gesamtlänge des jeweiligen Schenkels (29, 31) erstreckt.

5. Endkantenschoner (24) nach einem der Ansprüche 1 bis 4, **dadurch gekennzeichnet, dass** die Versteifungsrippe (34) am Mittelteil (27) eine Höhe von mindestens 10 % einer Gesamtlänge eines der Schenkel (29, 31) aufweist, wobei die Höhe in einer Ebene senkrecht zu einer Endkante (18) eines Windenergieanlagenrotorblatts (10) gemessen ist, an der der Endkantenschoner (24) angeordnet ist.

6. Endkantenschoner (24) nach einem der Ansprüche 1 bis 5, **dadurch gekennzeichnet, dass** der Körper (26) zwei mit seitlichem Abstand zueinander angeordnete Versteifungsrippen (34) umfasst.

7. Endkantenschoner (24) nach einem der Ansprüche 1 bis 6, **dadurch gekennzeichnet, dass** jedes der Ablösemittel einen massiven Metallblock (60) umfasst, der an einer Außenseite (38, 42) des jeweiligen Schenkels (29, 31) befestigt ist.

8. Endkantenschoner (24) nach einem der Ansprüche 1 bis 6, **dadurch gekennzeichnet, dass** die Einlage (48) vom Körper (26) getrennt ist und jedes der Einlagenteile (50, 52) einen mechanischen Anschlag (68) umfasst, wobei jedes der Ablösemittel ausgebildet ist, eine Kraft auf einen der mechanischen Anschläge (68) auszuüben.

9. Endkantenschoner (24) nach einem der Ansprüche 1 bis 8, **dadurch gekennzeichnet, dass** die Kontaktflächen (36, 40) der Schenkel (29, 31) und der an den Kontaktflächen (36, 40) anliegenden Außenflächen der Einlageabschnitte (50, 52) einen geringen Reibungskoeffizienten aufweisen, wenn der Endkantenschoner (24) an einer Endkante (18) angeordnet ist.

10. Endkantenschoner (24) nach einem der Ansprüche 1 bis 9, **dadurch gekennzeichnet, dass** die Einlageabschnitte (50, 52) durch eine flexible Platte (80) aus faserverstärktem Kunststoff gebildet sind.

11. Endkantenschoner (24) nach Anspruch 10, **dadurch gekennzeichnet, dass** die mechanischen Anschläge (68) jeweils durch ein Metallprofil gebildet sind, das einen flachen Befestigungsabschnitt (78) hat, der in den faserverstärkten Kunststoff der jeweiligen flexiblen Platte (80) eingebettet ist.

12. Endkantenschoner (24) nach einem der Ansprüche 1 bis 9, **dadurch gekennzeichnet, dass** die Einlageabschnitte (50, 52) durch Sandwichplatten gebildet sind, die jeweils metallische Deckschichten und einen elastischen Kern haben.

13. Endkantenschoner (24) nach einem der Ansprüche 8 bis 12, **dadurch gekennzeichnet, dass** die Lösevorrichtung einen Gewindebolzen (64) umfasst, der dazu ausgebildet ist, gegen einen der mechanischen Anschläge (68) geschraubt zu werden.

14. Endkantenschoner (24) nach einem der Ansprüche 8 bis 12, **dadurch gekennzeichnet, dass** die Lösevorrichtung einen Handhebel (70) umfasst.

15. Endkantenschoner (24) nach einem der Ansprüche 14, **dadurch gekennzeichnet, dass** der Handhebel (70) eine radiale Nocke (76) umfasst.

## Revendications

1. Protecteur de bord de fuite (24) d'une pale de rotor de turbine éolienne (10), le protecteur de bord de fuite (24) comportant :
- un corps (26) ayant une portion centrale (27), une première patte (29) avec une première surface de contact (36) et une seconde patte (31) avec une seconde surface de contact (40), dans lequel la première patte (29) et la seconde patte (31) s'étendent à partir de la portion centrale (27) à un angle fixe et la première surface de contact (36) est face à la seconde surface de contact (40),
- une incrustation (48) ayant une première section d'incrustation (50) et une seconde section d'incrustation (52),
- dans lequel le protecteur de bord de fuite (24) est conçu pour être placé au niveau d'un bord de fuite (18) d'une pale de rotor de turbine éolienne (10), de sorte que la portion centrale (27) soit agencée près du bord de fuite (18), que la première section d'incrustation (50) soit agencée entre la première surface de contact (36) et une surface côté aspiration (15) de la pale de rotor de turbine éolienne (10) et que la seconde section d'incrustation (52) soit agencée entre la seconde surface de contact (40) et une surface côté pression (17) de la pale de rotor de turbine éolienne (10), **caractérisé en ce que**
- le corps (26) est un ensemble métallique comportant au moins une nervure de raidissement (34) agencée au niveau de la portion centrale (27) et montée sur les deux pattes (29, 31) et en outre **en ce que**
- au moins une patte comporte un moyen de libération adapté pour exercer une force déplaçant le corps (26) dans une direction s'éloignant de la pale de rotor de turbine éolienne (10).

2. Protecteur de bord de fuite (24) selon la revendication 1, **caractérisé en ce que** la première patte (29) comporte une première plaque métallique (30) ayant un côté intérieur formant la première surface de contact (36) et un côté extérieur (38) et **en ce que** la seconde patte (31) comporte une seconde plaque métallique (32) ayant un côté intérieur formant la seconde surface de contact (40) et un côté extérieur (42), dans lequel la au moins une nervure de raidissement (34) est montée sur le côté extérieur (38) de la première plaque métallique (30) et sur le côté extérieur (42) de la seconde plaque métallique (32).

3. Protecteur de bord de fuite (24) selon la revendication 1 ou 2, **caractérisé en ce que** l'ensemble métallique comporte un tube métallique (28) agencé au niveau de la portion centrale (27) et ayant une fente longitudinale (58) avec un premier bord longitudinal monté sur la première patte (29) et un second bord longitudinal monté sur la seconde patte (31).

4. Protecteur de bord de fuite (24) selon l'une quelconque des revendications 1 à 3, **caractérisé en ce que** la nervure de raidissement (34) s'étend à partir de la portion centrale (27) le long de chacune des pattes (29, 31) sur au moins 50 % d'une longueur totale de la patte (29, 31) respective.

5. Protecteur de bord de fuite (24) selon l'une quelconque des revendications 1 à 4, **caractérisé en ce que** la nervure de raidissement (34) au niveau de la portion centrale (27) a une hauteur d'au moins 10 % d'une longueur totale d'une des pattes (29, 31), dans lequel la hauteur est mesurée dans un plan perpendiculaire à un bord de fuite (18) d'une pale de rotor de turbine éolienne (10) au niveau de laquelle est placé le protecteur de bord de fuite (24).

6. Protecteur de bord de fuite (24) selon l'une quelconque des revendications 1 à 5, **caractérisé en ce que** le corps (26) comporte deux nervures de raidissement (34) agencées à une distance latérale l'une de l'autre.

7. Protecteur de bord de fuite (24) selon l'une quelconque des revendications 1 à 6, **caractérisé en ce que** chacun des moyens de libération comporte un bloc métallique solide (60) monté sur un côté extérieur (38, 42) de la patte (29, 31) respective.

8. Protecteur de bord de fuite (24) selon l'une quelconque des revendications 1 à 6, **caractérisé en ce que** l'incrustation (48) est séparée du corps (26) et **en ce que** chacune des sections d'incrustation (50, 52) comporte une butée mécanique (68), dans lequel chacun des moyens de libération est adapté pour exercer une force sur l'une des butées mécaniques (68).

9. Protecteur de bord de fuite (24) selon l'une quelconque des revendications 1 à 8, **caractérisé en ce que** les surfaces de contact (36, 40) des pattes (29, 31) et les surfaces extérieures des sections d'incrustation (50, 52) butant contre les surfaces de contact (36, 40) lorsque le protecteur de bord de fuite (24) est placé au niveau du bord de fuite (18) montrent un coefficient de frottement faible.

10. Protecteur de bord de fuite (24) selon l'une quelconque des revendications 1 à 9, **caractérisé en ce que** les sections d'incrustation (50, 52) sont formées par une plaque flexible (80) fabriquée en polymère renforcé par des fibres.

11. Protecteur de bord de fuite (24) selon la revendication 10, **caractérisé en ce que** les butées mécaniques (68) sont chacune formées par un profil métallique ayant une section de serrage plate (78) incorporée dans le polymère renforcé par des fibres de la plaque flexible (80) respective.

12. Protecteur de bord de fuite (24) selon l'une quelconque des revendications 1 à 9, **caractérisé en ce que** les sections d'incrustation (50, 52) sont formées par des plaques d'enserrement ayant des couches de dessus métalliques et un noyau élastique.

13. Protecteur de bord de fuite (24) selon l'une quelconque des revendications 8 à 12, **caractérisé en ce que** le moyen de libération comporte un boulon fileté (64) adapté pour être vissé contre l'une des butées mécaniques (68).

14. Protecteur de bord de fuite (24) selon l'une quelconque des revendications 8 à 12, **caractérisé en ce que** le moyen de libération comporte un levier à main (70).

15. Protecteur de bord de fuite (24) selon la revendication 14, **caractérisé en ce que** le levier à main (70) comporte une came radiale (76).
